# FASCICULE DE BREVET EUROPEEN

(11) **EP 1 298 343 B1**
(45) Date de publication et mention de la délivrance du brevet: **22.11.2006**
(21) Numéro de dépôt: 02292081.3
(22) Date de dépôt: 22.08.2002
(51) Int. Cl.: F16D 65/14

(54) **Dispositif de blocage de sécurité pour équipement électromécanique, et frein de roue d'aéronef équipé d'un tel dispositif**
Sicherheitsblockiervorrichtung für ein elektromechanisches Gerät sowie hiermit ausgerüstete Bremse eines Flugzeugs
Safety locking device for electromechanical equipment and aircraft wheel brake provided with such a device

(30) Priorité: 03.09.2001 FR 0111364
(43) Date de publication de la demande: 02.04.2003
(73) Titulaire: MESSIER-BUGATTI, 78140 Velizy Villacoublay (FR)
(72) Inventeur: Girod, Pierre, 75017 Paris (FR); Chico, Philippe, 92500 Rueil-Malmaison (FR)
(74) Mandataire: Jaunez, Xavier

(56) Documents cités:
- DE-A- 19 826 785
- US-A- 5 949 168

## Description

L'invention concerne un dispositif de blocage de sécurité pour équipement électromécanique.

Dans de nombreux domaines industriels, les organes des machines sont actionnés par un moteur électrique via une chaîne cinématique. Dans certaines applications, des considérations de sécurité imposent de bloquer le ou les organes en position lorsqu'ils sont inutilisés.

Pour ce faire, il est connu d'introduire un obstacle dans une cavité réalisée dans une partie tournante de la chaîne cinématique, afin de provoquer un blocage positif de celle-ci. Mais cela impose de pouvoir arrêter la partie tournante de sorte que la cavité soit au droit de l'obstacle, ce qui est délicat à réaliser. Par ailleurs, sous l'effet du relâchement de l'équipement, ou d'une tentative de manoeuvre de celui-ci, l'obstacle peut se retrouver coincé dans la cavité, ce qui rend difficile son retrait.

On connaît également des moteurs équipés d'un frein à friction en bout d'arbre, dans lequel un disque est solidaire de l'arbre du moteur, tandis qu'un second disque disposé en regard du premier est mobile entre une position de blocage dans laquelle il est pressé contre le premier disque en vue de bloquer le moteur en rotation, et une position de libération dans lequel le second disque est maintenu éloigné du premier disque, ce qui permet la libre rotation du moteur. En général, les disques sont maintenus dans l'une des positions par l'action d'un organe élastique, et dans l'autre position par l'action constante d'un organe d'actionnement, par exemple un électro-aimant, ou encore un vérin dont une chambre a été remplie d'huile puis obturée, agissant à l'encontre de l'organe élastique.

En cas de défaillance de l'organe d'actionnement (panne de courant pour l'électro-aimant, ou fuite pour le vérin), la position que l'organe d'actionnement permettait de maintenir n'est plus garantie, et le dispositif de blocage glisse progressivement vers l'autre position sous l'effet du moyen élastique, ce qui peut se révéler dangereux. En effet, l'arbre tournant peut se retrouver libre de tourner alors qu'il est censé être bloqué, ou à l'inverse, l'arbre tournant peut être bloqué alors qu'il est censé être libre de tourner.

On donnera ici quelques exemples tirés du domaine des freins électriques pour roues d'aéronefs. Ce type de frein comprend une pile de disque dont certains sont mobiles en rotation avec la roue (rotors), tandis que d'autres, disposés en alternance des premiers, sont immobiles en rotation (stators). Le frein comporte au moins un actionneur électromécanique pourvu d'un moteur électrique et d'un mécanisme agencé pour presser les disques en vue de générer un effort de freinage de la roue.

Pour immobiliser l'aéronef à l'arrêt, il est connu de maintenir les disques du frein pressés, de façon que la roue soit bloquée en sécurité. Pour ce faire, dans le cadre d'un frein électrique, il est avantageux de prévoir un moyen de blocage de l'actionneur, de sorte qu'il suffit de commander l'actionneur pour qu'il presse les disques, puis de bloquer l'actionneur dans cette position grâce au moyen de blocage.

L'utilisation dans ce cas d'espèce d'un système à obstacle et cavité homologue en guise de moyen de blocage n'est pas satisfaisante. En effet, lorsque l'on immobilise l'aéronef, celui-ci vient en général d'atterrir et donc de freiner de façon soutenue et la structure du frein s'est donc dilatée sous l'effet de la chaleur.

Si l'on procède au blocage de l'actionneur avant que le frein ne soit refroidi, la rétraction progressive de la structure du frein aura pour conséquence d'augmenter l'effort de pressage des disques. Par réaction, si l'actionneur est réversible, cette augmentation d'effort peut conduire à un coincement de l'obstacle dans la cavité qui le reçoit, ce qui peut entraîner des difficultés de déblocage du doigt.

Par ailleurs, il faut dimensionner largement l'obstacle pour éviter qu'il ne casse lors d'une tentative d'activation de l'actionneur bloqué par l'obstacle.

De même, l'utilisation d'un système à disques de friction pour bloquer l'actionneur n'est pas plus satisfaisante. Un tel système est certes plus tolérant à une sollicitation interne ou externe qui tend à forcer le blocage (par exemple une tentative d'activation de l'actionneur alors que le système de blocage a été mis en position de blocage), mais ne permet pas de garantir une sécurité élevée.

En effet, l'actionneur comprend en général un organe d'actionnement agencé de façon à maintenir les disques de friction de l'actionneur en position écartée lorsque l'actionneur est actif (et donc alimenté électriquement), un ressort pressant les disques l'un contre l'autre lorsque l'organe d'actionnement n'est pas alimenté pour bloquer l'actionneur. Une panne d'alimentation de l'organe d'actionnement (ou un défaut de fonctionnement de celui-ci) aurait pour conséquence de bloquer l'actionneur de façon non désirée dans la position qu'il occupe au moment de l'incident, rendant celui-ci inopérant.

On connaît par ailleurs du document US-A-5 949 168 un frein pour véhicule automobile avec un dispositif de blocage comportant un organe de manoeuvre utilisé uniquement pour faire passer le dispositif de blocage d'une position de libération à une position de blocage. La position de libération est tenue au moyen d'un ressort, tandis que la position de blocage est tenue au moyen d'une rotation du moteur dans un sens tendant à presser le disque du frein, ayant pour effet de placer le dispositif de blocage en coincement irréversible.

Le dispositif de blocage présenté dans ce document est conçu pour permettre un décoincement automatique du dispositif de blocage sous l'effet d'une rotation inverse au moteur, qui remet le dispositif de blocage en position de libération.

Un tel système n'est pas utilisable en l'état en aéronautique, domaine dans lequel il n'est pas souhaitable qu'une rotation accidentelle du moteur, alors que le dispositif de blocage est en position de blocage, conduise à la libération du moteur, et donc au relâchement du frein, ce qui pourrait s'avérer dangereux.

On connaît aussi du document JP56-120831 un autre dispositif de blocage, conforme au préambule de la revendication 1, ne nécessitant pas l'action continue d'un organe d'actionnement pour maintenir le dispositif dans l'une ou l'autre des positions de blocage ou de libération, tout en étant tolérant à une sollicitation interne ou externe qui tendrait à forcer le blocage, sans que cette sollicitation puisse faire passer le dispositif de blocage de l'état bloqué à l'état libre.

Cependant, le moyen de maintien en position de blocage ou de libération est monté radialement à l'extérieur des éléments de friction, ce qui pourrait créer des problèmes de coincement. L'invention vise à améliorer ce dispositif.

L'invention a plus précisément pour objet un dispositif de blocage de sécurité destiné à équiper un équipement électromécanique qui est muni d'un arbre tournant autour d'un axe de rotation, le dispositif comportant un premier élément de friction lié en rotation audit arbre et s'étendant dans un plan normal à l'axe de rotation dudit arbre, et un second élément de friction immobile en rotation et s'étendant en regard du premier élément de friction, l'un des deux éléments de friction étant mobile en translation selon ledit axe, sous l'action de moyens d'actionnement commandables, entre une position de blocage dans laquelle les deux éléments de friction sont pressés l'un contre l'autre par un organe élastique et une position de libération dans laquelle les deux éléments de friction sont maintenus écartés, lesdits moyens d'actionnement n'intervenant pas dans le maintien de l'une ou l'autre des positions de blocage ou de libération. Les positions de blocage et de libération correspondent à des positions angulaires successives d'un sélecteur mobile en rotation et lié en translation à l'élément de friction mobile en translation, ledit sélecteur étant maintenu dans l'une quelconque de ses positions angulaires par l'organe élastique précité, les moyens d'actionnement commandables étant agencés pour assurer le passage du sélecteur d'une position angulaire à la suivante, et par suite le passage de l'élément de friction mobile en translation de l'une à l'autre de ses positions de blocage et de libération,

Selon l'invention, le sélecteur est centré sur l'axe de rotation.

Ainsi, les moyens d'actionnement n'étant pas utilisés pour maintenir l'une des positions de blocage ou de libération, ils n'ont donc plus à être alimentés de façon prolongée pour maintenir les éléments de friction dans l'une ou l'autre de leurs positions. Par ailleurs, l'utilisation d'éléments de friction, de préférence à un obstacle positif, autorise un glissement sous l'effet par exemple d'une tentative d'activation de l'équipement électromécanique, ou encore en cas d'augmentation non désirée de l'effort extérieur s'appliquant sur l'actionneur.

En outre, les deux positions sont tenues par l'organe élastique, et une rotation accidentelle du moteur n'a pas pour effet de faire passer le dispositif de la position de blocage à la position de libération.

On notera qu'alors dans le document US-A-5 949 168, les positions de blocage et de libération correspondent à des positions angulaires alternatives, les positions de blocage et de libération du dispositif de blocage selon l'invention correspondent à des positions angulaires successives.

Selon une disposition préférée, le sélecteur comporte un organe d'indexage qui est reçu dans des creux d'une couronne, les creux étant disposés circonférentiellement sur la couronne et étant organisés en une première et deuxième séries de creux en alternance, les creux de la première série ayant une profondeur telle que les éléments de friction sont en contact avant que l'organe d'indexage ne butte au fond desdits creux, et les creux de la deuxième série ayant une profondeur telle que l'organe d'indexage butte au fond desdits creux avant que les éléments de friction ne soient en contact.

Les positions de blocage et de libération sont alors simplement obtenues par le placement de l'organe d'indexage dans l'une ou l'autre des séries de creux de la couronne.

Avantageusement, les moyens d'actionnement commandables comprennent un poussoir qui est mobile axialement et qui est agencé pour pousser le sélecteur à l'encontre de l'organe élastique de façon à dégager l'organe d'indexage du creux de la couronne dans lequel il est engagé, le sélecteur et/ou le poussoir ayant un profil de came qui provoque une rotation dudit sélecteur de façon à provoquer le déplacement de l'organe d'indexage vers un creux adjacent lors du retour dudit poussoir dans sa position initiale.

Ainsi, par un mouvement simple de translation du poussoir qui peut être commandé facilement, on provoque la rotation concomitante du sélecteur.

Selon une disposition avantageuse, le profil de came est porté par le poussoir et agit sur l'extrémité libre de l'organe d'indexage.

Selon un mode particulier de réalisation, l'organe d'indexage comporte une pluralité de dents s'étendant vers la couronne, les dents étant en nombre de moitié inférieur au nombre de creux de la couronne.

Avantageusement, un organe additionnel de rappel coopère avec le poussoir pour ramener celui-ci dans sa position initiale après son actionnement.

Les moyens d'actionnement commandables comportent de préférence un électro-aimant servant à actionner le poussoir, ledit électro-aimant n'étant alimenté que pour passer d'une position de blocage à une position de libération ou vice versa de l'élément de friction mobile en translation.

L'invention a également pour objet un frein pour roue d'aéronef, comportant une pile de disques comprenant des rotors liés en rotation à la roue, et des stators fixes en rotation et agencés en alternance dans la pile avec les rotors, ledit frein comportant au moins un actionneur électromécanique agencé pour presser la pile de disques en vue d'exercer un effort électromécanique de freinage sur la roue. Selon l'invention, l'actionneur électromécanique est équipé d'un dispositif de blocage de sécurité comportant l'une au moins des caractéristiques précitées, associé à un arbre tournant de la chaîne cinématique dudit actionneur.

D'autres caractéristiques et avantages de l'invention apparaîtront plus clairement à la lumière de la description qui suit d'un mode de réalisation particulier non limitatif de l'invention. Il sera fait référence aux dessins annexés et aux figures parmi lesquelles :
- la figure 1 est une vue en coupe d'un frein électrique de roue d'aéronef dont un actionneur électromécanique est muni d'un dispositif de blocage de sécurité selon l'invention;
- la figure 2 est une vue en coupe partielle d'une partie de l'actionneur illustré à la figure 1, muni d'un dispositif de blocage de sécurité selon l'invention;
- la figure 3 est une vue en perspective éclatée partielle de la figure 2 montrant certaines pièces des moyens d'actionnement du dispositif de blocage de sécurité;
- les figures 4 à 7 sont des vues développées partielles du dispositif de blocage illustré à la figure 3, dans différentes positions des organes du dispositif de sécurité.

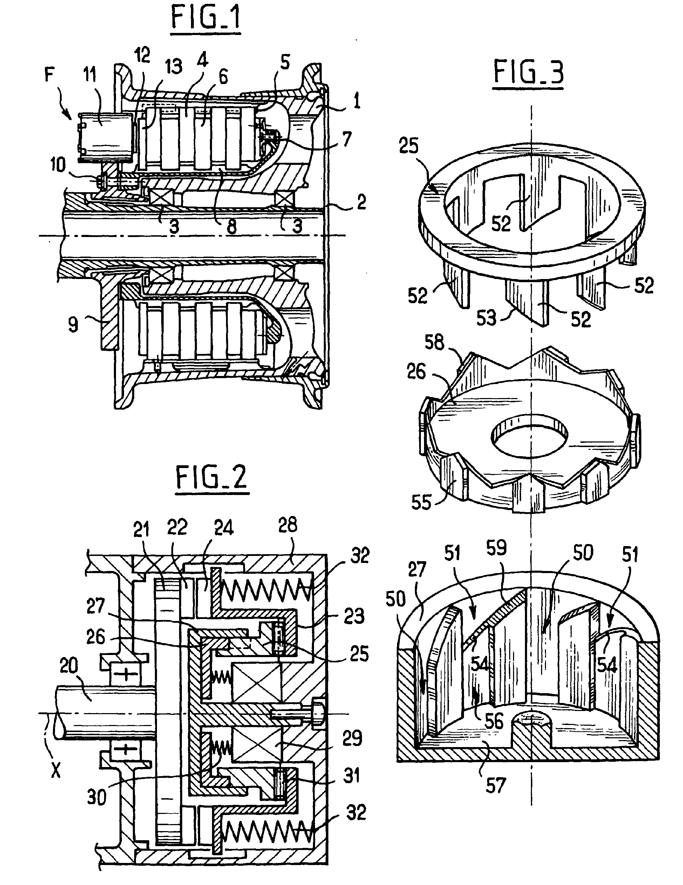

En référence à la figure 1, et de façon connue en soi, une roue d'aéronef 1 est montée en rotation sur un axe 2 par l'intermédiaire de roulements 3. La roue 1 est équipée d'un frein F comprenant une pile de disques composée de rotors 4 qui sont mobiles en rotation avec la roue 1 grâce à un clavetage périphérique 5, et de stators 6 qui sont disposés en alternance avec les rotors 4 et qui sont liés en rotation à un tube de torsion 7 grâce à un clavetage intérieur 8. Le tube de torsion 7 est lui-même lié à une couronne 9 par des vis 10. La couronne 9 est enfilée sur l'axe 1, et arrêtée en rotation vis à vis de l'axe par un moyen non représenté ici, de sorte que les stators 6 sont également immobiles en rotation.

La couronne 9 porte des actionneurs électromécaniques 11 agencés circonférentiellement, dont un seul est représenté ici. Ces actionneurs comportent un poussoir 12 actionné par un moteur électrique non visible ici pour presser la pile de disques par l'intermédiaire d'une plaque de pression 13.

Dans ce type de freins, ainsi que cela a été mentionné dans la partie introductive de la description, il est avantageux de prévoir un moyen de blocage de sécurité de l'actionneur, afin de réaliser la fonction de frein de parc.

A cet effet, et comme cela est visible à la figure 2, on munit l'un des arbres 20 de la chaîne cinématique de l'actionneur 11 d'un dispositif de blocage de sécurité selon l'invention, comprenant un disque 21 lié en rotation à l'arbre 20 et portant une garniture de friction 22. En regard du disque 21 se trouve un porte-garniture 23, qui est muni d'une garniture 24 et qui est immobile en rotation et mobile en translation selon l'axe X de l'arbre 20 à l'encontre de ressorts 32 qui tendent à rappeler le porte-garniture 23 vers le disque 21. La présence de garnitures ne constitue aucunement une obligation, et on pourra prévoir un contact direct entre les deux éléments frottants, comme cela est bien connu de l'homme de métier.

Le porte-garniture 23 est associé à des moyens d'actionnement comportant un sélecteur 25 qui est mobile à la fois en rotation et en translation selon l'axe X. Le sélecteur 25 est soumis à l'action d'un poussoir 26 qui est guidé en translation par une couronne 27 liée au carter 28 du dispositif, et qui est manoeuvré par un électro-aimant 29 à l'encontre de ressorts de rappel 30.

Lorsque le poussoir 26 est manoeuvré, il force le sélecteur 25 contre le porte-garniture 23 par l'intermédiaire d'une butée à aiguilles (ou à rouleaux) 31.

Comme cela est mieux visible à la figure 3, la couronne 27 comporte une première série de creux périphériques 50 s'étendant jusqu'au fond 57 de la couronne 27, et en alternance, une deuxième série de creux 51, ayant une profondeur plus faible délimitée par un rebord 54 qui prolonge le bord supérieur 59 de la protubérance adjacente délimitant un creux profond 50.

Le sélecteur 25 comprend quant à lui des dents 52 réparties circonférentiellement pour s'étendre vers les creux de la couronne 27, les dents 52 pouvant s'engager soit dans la série de creux 50, soit dans la série de creux 51 de la couronne 27. Lorsque les dents 52 sont engagées dans la série de creux 51, leur extrémité libre 53 vient en butée contre le rebord 54 des creux 51. Ces caractéristiques définissent deux positions angulaires distinctes du sélecteur 25 par rapport à la couronne 25, chacune de ces positions étant associée à l'une des positions de libération ou de blocage du dispositif, comme cela sera plus amplement expliqué plus loin.

Le poussoir 26 comporte des redans 55 qui s'intègrent dans les creux 50 de la couronne 27, ainsi que dans des parties partiellement évidées 56 de la couronne 27 prolongeant les creux 51 vers le fond 57 de la couronne 27. Le poussoir 26 présente par ailleurs un profil de came 58 destiné à coopérer avec l'extrémité libre 53 des dents 52 du sélecteur 25.

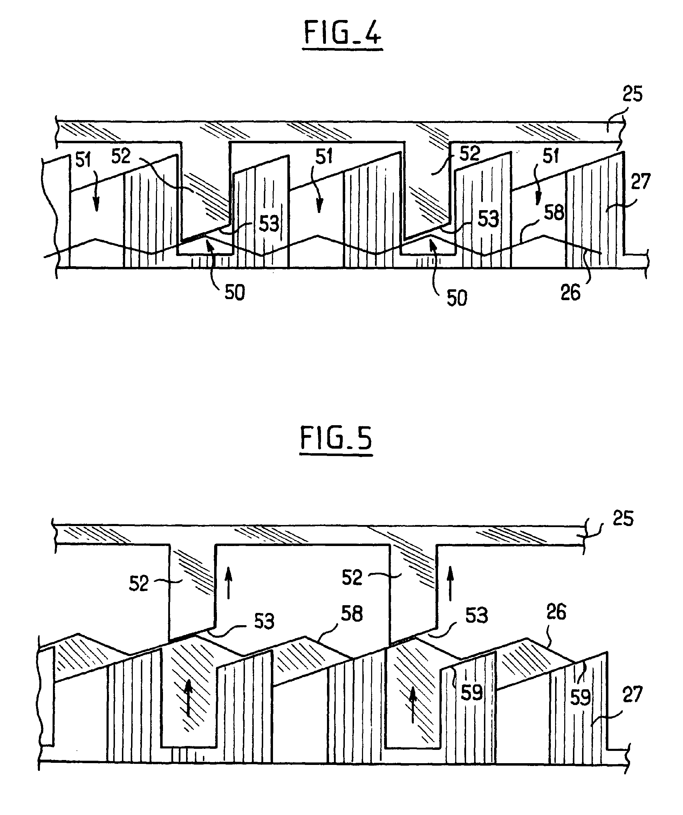

Le fonctionnement des moyens d'actionnement va maintenant être expliqué en relation avec les figures 4 à 7.

La figure 4 représente le sélecteur 25 dans une position angulaire correspondant à l'engagement des dents 52 du sélecteur 25 dans les creux profonds 50. Le poussoir 26, dont seul le profil de came 58 a été représenté, est maintenu en butée contre le fond 57 de la couronne 27. Lorsque le sélecteur 25 et le poussoir 26 sont dans cette position, les garnitures 22 et 24 portées respectivement par le disque 21 et le porte-garniture 23 sont en contact et sont maintenues pressées l'une contre l'autre par les ressorts 32. Le sélecteur 25 dispose alors d'un jeu de fonctionnement axial entre le poussoir 26 et la butée à aiguilles 31, qui est elle-même en appui contre le porte-garniture 23. Il y a une correspondance directe entre la position angulaire du sélecteur 25 définie par l'engagement des dents 52 dans les creux 50 de la couronne 26, et le blocage de l'arbre 20 en rotation. On remarquera également que l'extrémité libre (bord 53) des dents 52 ne touche pas le fond des creux 50, qui se trouve être le fond 57 de la couronne 27.

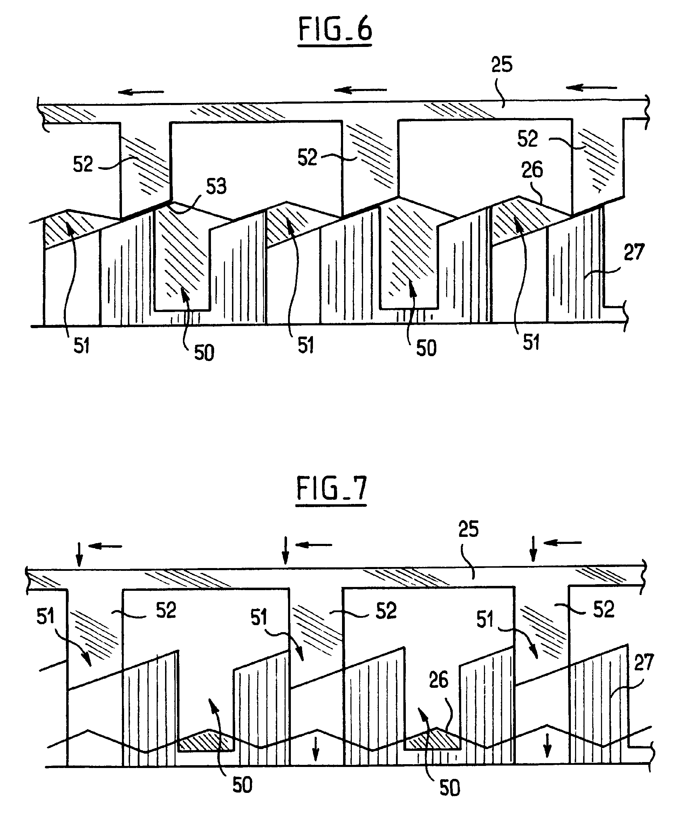

A la figure 5, le poussoir 26 a été actionné à l'encontre des ressorts 30 par l'électro-aimant 29, qui l'attire vers lui. Le poussoir 26 pousse alors le sélecteur 25, jusqu'à ce que les dents 52 sortent des creux profonds 50, comme cela a été illustré. Dans le même temps, le sélecteur 25 pousse le porte-garniture 23 par l'intermédiaire de la butée à aiguilles 31, ce qui a pour effet de séparer les garnitures 22 et 24, et donc d'autoriser à nouveau la libre rotation de l'arbre 20. Ceci correspond alors à la position dite de libération.

Etant donné la forme du profil de came 58 du poussoir 26 sur laquelle les extrémités libres 53 des dents 52 sont en appui, les dents 52 vont avoir tendance à glisser obliquement, ce qui va provoquer une rotation du sélecteur 25 jusqu'à la position illustrée en figure 6, dans laquelle les dents 52 sont alors retenues dans un creux du profil de came 58 du poussoir 26.

Dans cette position, on relâche alors l'action de l'électro-aimant, ce qui provoque le retour du poussoir 26 vers le fond de la couronne 27 sous l'effet des ressorts de rappel 30.

L'extrémité libre 53 des dents 52 glisse alors sur le rebord d'extrémité 59 des séparations définissant les creux 50 et 51, et vient se loger dans le creux 51 en butée contre le fond 54 desdits creux comme cela est illustré à la figure 7, sous l'effet des ressorts 32 qui pressent le porte-garniture 23 contre le sélecteur 25 via la butée à aiguilles 31.

Cette position angulaire du sélecteur 25 par rapport à la couronne 27 correspond à une position axiale du sélecteur 25 qui éloigne le porte-garniture 23 du disque 21, de sorte que les garnitures 22,24 ne sont plus en contact.

Là encore, il y a une correspondance directe entre la position angulaire du sélecteur 25 définie par l'engagement des dents 52 dans les creux 51, et la libération en rotation de l'arbre 20.

Pour repasser dans l'autre position, qui est la position de blocage, il suffit à nouveau d'alimenter l'électro-aimant pour attirer le poussoir 26, lequel va faire sortir les dents 52 des creux 51. Le sélecteur 25 va alors tourner sous l'effet du profil de came du poussoir 26, puis quand l'électro-aimant ne sera plus alimenté, le sélecteur va finir de tourner de façon que ses dents 52 se logent dans les creux profonds 50 sous l'effet des ressorts 32.

On constate donc que l'électro-aimant 29 ne sert uniquement qu'à déplacer le sélecteur d'une position angulaire à la suivante, et non à maintenir le sélecteur, et donc le porte-garniture, dans l'une ou l'autre des positions de blocage ou de libération. Les positions angulaires correspondent alternativement à la position de blocage et à la position de libération prises par le disque 21 et le porte-garniture 23. Ces deux éléments sont maintenus dans l'une ou l'autre des positions de blocage ou de libération par les ressorts 32, qui assurent également la pression des garnitures 22,24 l'une contre l'autre en position de blocage.

L'invention n'est pas limitée au mode particulier de réalisation qui vient d'être décrit, mais bien au contraire entend couvrir toute variante qui entrerait dans le cadre de l'invention tel que défini par les revendications.

En particulier, bien que l'on ait décrit un sélecteur dont l'organe d'indexage est constitué par des dents, l'organe d'indexage pourra être constitué par un ou plusieurs doigts pouvant s'étendre radialement.

Bien que l'on ait indiqué que les moyens d'actionnement commandables comportent un électro-aimant, tout autre moyen connu d'actionnement sera envisageable, comme un moteur électrique ou un vérin.

Bien que l'on ait indiqué que l'élément de friction mobile n'est pas lié à l'arbre, on pourra réaliser un dispositif de blocage de sécurité dans lequel l'élément de friction mobile axialement sera lié en rotation à l'arbre.

Bien que l'on ait enfin indiqué que les éléments de friction se présentent sous la forme de garnitures se contactant selon un plan normal à l'axe X de l'arbre 20, on pourra également envisager des garnitures homologues de forme conique. On pourra également envisager un dispositif à garnitures radiales, du type tambour et mâchoires, les mâchoires étant actionnées par le sélecteur via un renvoi ou tout autre cinématique adéquate.

## Revendications

1. Dispositif de blocage de sécurité, destiné à équiper un équipement électromécanique qui est muni d'un arbre (20) tournant autour d'un axe de rotation (X), le dispositif comportant un premier élément de friction (21,22) lié en rotation audit arbre (20) et s'étendant dans un plan normal à l'axe de rotation (X) dudit arbre, et un second élément de friction (23,24) immobile en rotation et s'étendant en regard du premier élément de friction (21,22), l'un des deux éléments de friction (21,22 ;23,24) étant mobile en translation selon ledit axe (X), sous l'action de moyens d'actionnement commandables (26,29) entre une position de blocage dans laquelle les deux éléments de friction (21,22 ;23,24) sont pressés l'un contre l'autre par un organe élastique (32) et une position de libération dans laquelle les deux éléments de friction (21,22 ;23,24) sont maintenus écartés, de sorte que les positions de blocage et de libération correspondent à des positions angulaires successives d'un sélecteur (25) mobile en rotation et lié en translation à l'élément de friction mobile en translation(23,24), ledit sélecteur (25) étant maintenu dans l'une quelconque de ses positions angulaires par l'organe élastique précité (32), sans que les moyens d'actionnement (26,29) n'interviennent dans le maintien de l'une ou l'autre des positions de blocage ou de libération, les moyens d'actionnement commandables (26,29) étant agencés pour assurer le passage du sélecteur (25) d'une position angulaire à la suivante, et par suite le passage de l'élément de friction mobile en translation (23,24) de l'une à l'autre de ses positions de blocage et de libération, **caractérisé en ce que** le sélecteur (25) est centré sur l'axe de rotation (X).

2. Dispositif de sécurité selon la revendication 1, **caractérisé en ce que** le sélecteur (25) comporte un organe d'indexage (52) qui est reçu dans des creux (50,51) d'une couronne (27), les creux étant disposés circonférentiellement sur la couronne (27) et étant organisés en une première et deuxième séries de creux en alternance, les creux (50) de la première série ayant une profondeur telle que les éléments de friction (21,22 ;23,24) sont en contact avant que l'organe d'indexage (52) ne butte au fond desdits creux (50), et les creux (51) de la deuxième série ayant une profondeur telle que l'organe d'indexage (52) butte au fond desdits creux (51) avant que les éléments de friction (21,22 ;23,24) ne soient en contact.

3. Dispositif de sécurité selon la revendication 2, **caractérisé en ce que** les moyens d'actionnement commandables comprennent un poussoir (26) qui est mobile axialement et qui est agencé pour pousser le sélecteur (25) à l'encontre de l'organe élastique (32) de façon à dégager l'organe d'indexage (52) du creux (50 ou 51) de la couronne (27) dans lequel il est engagé, le sélecteur (25) et/ou le poussoir (26) ayant un profil de came qui provoque une rotation dudit sélecteur (25) de façon à provoquer le déplacement de l'organe d'indexage (52) vers un creux adjacent lors du retour dudit poussoir (26)dans sa position initiale.

4. Dispositif de sécurité selon la revendication 3, **caractérisé en ce que** le profil de came est porté par le poussoir (26) et agit sur l'extrémité libre (53) de l'organe d'indexage (52).

5. Dispositif de sécurité selon l'une des revendications 2 à 4, **caractérisé en ce que** l'organe d'indexage (52) comporte une pluralité de dents (52) s'étendant vers la couronne (27), les dents (52) étant en nombre de moitié inférieur au nombre de creux (50,51) de la couronne (27).

6. Dispositif de sécurité selon l'une des revendications 3 à 5, **caractérisé en ce qu**'un organe additionnel de rappel (30) coopère avec le poussoir (26) pour ramener celui-ci dans sa position initiale après son actionnement.

7. Dispositif de sécurité selon l'une des revendications 3 à 6, **caractérisé en ce que** les moyens d'actionnement commandables comportent un électro-aimant (29) servant à actionner le poussoir (26), ledit électro-aimant (29) n'étant alimenté que pour passer d'une position de blocage à une position de libération ou vice versa de l'élément de friction mobile en translation (23, 24).

8. Frein (F) pour roue (1) d'aéronef, comportant une pile de disques comprenant des rotors (4) liés en rotation à la roue (1), et des stators (6) fixes en rotation et disposés en alternance dans la pile avec les rotors (4), ledit frein comportant au moins un actionneur électromécanique (11) agencé pour presser la pile de disques en vue d'exercer un effort de freinage sur la roue (1), **caractérisé en ce que** l'actionneur électromécanique (11) est équipé d'un dispositif de blocage de sécurité selon l'une au moins des revendications précédentes, associé à un arbre tournant de la chaîne cinématique dudit actionneur.

## Claims

1. A safety locking device intended to equip an electromechanical equipment which is provided with a shaft (20) rotating about a rotation axis (X), the device comprising a first friction element (21, 22) rotationally connected to the said shaft (20) and extending in a plane normal to the rotation axis (X) of the said shaft, and a second friction element (23, 24) immobile with respect to rotation and extending opposite said first friction element (21, 22), one of the two friction elements (21, 22; 23, 24) being able to move in translation along the said axis (X), under the action of controllable actuation means (26, 29), between a locking position in which the two friction elements (21, 22; 23, 24) are pressed against one another by a resilient member (32) and a release position in which the two friction elements (21, 22; 23, 24) are kept separated, the said actuation means (26, 29) not participating in the maintenance of one or other of the locking or release positions, **characterised in that** the locking and release positions correspond to successive angular positions of a selector (25) able to move in rotation and connected in translation to the friction element able to move in translation (23, 24), the said selector (25) being maintained in any one of its angular positions by the aforementioned resilient member (32), the controllable actuation means (26, 29) being arranged to provide the passage of the selector (25) from one angular position to the following, and subsequently the passage of said friction element able to move in translation (23, 24) from one to the other of its locking and release positions, **characterised in that** the selector is centred on the axis of rotation (X).

2. A safety device according to claim 1, **characterised in that** the selector (25) comprises a locating member (52) which is received in hollows (50, 51) in a ring (27), the hollows being disposed circumferentially on the ring (27) and being organised in a first and second series of alternating hollows, the hollows (50) in the first series having a depth such that the friction elements (21, 22; 23, 24) are in contact before the locating member (52) abuts on the bottom of the said hollows (50), and the hollows (51) in the second series having a depth such that the locating member (52) abuts on the bottom of the said hollows (51) before the friction elements (21, 22; 23, 24) are in contact.

3. A safety device according to claim 2, **characterised in that** the controllable actuation means comprise a pusher (26) which is able to move axially and which is arranged to push the selector (25) counter to the elastic member (32) so as to release the locating member (52) from the hollow (50 or 51) in the ring (27) in which it is engaged, the selector (25) and/or the pusher (26) having a cam profile which causes a rotation of the said selector (25) so as to cause the movement of the locating member (52) towards an adjacent hollow when the said pusher (26) returns to its initial position.

4. A safety device according to claim 3, **characterised in that** the cam profile is carried by the pusher (26) and acts on the free end (53) of the locating member (52).

5. A safety device according to one of claims 2 to 4, **characterised in that** the locating member (52) has a plurality of teeth (52) extending towards the ring (27), the teeth (52) being in number half that of the number of hollows (50, 51) in the ring (27).

6. A safety device according to one of claims 3 to 5, **characterised in that** an additional return member (30) cooperates with the pusher (26) in order to return the latter to its initial position after its actuation.

7. A safety device according to one of claims 3 to 6, **characterised in that** the controllable actuation means comprise an electromagnet (29) serving to actuate the pusher (26), the said electromagnet (29) being supplied with power only to pass from a locking position to a release position of the friction element able to move in translation (23, 24), or vice-versa.

8. A brake (F) for an aircraft wheel (1), comprising a stack of discs comprising rotors (4) connected with respect to rotation to the wheel (1), and stators (6) fixed with respect to rotation and arranged in alternation in the stack with the rotors (4), the said brake comprising at least one electromechanical actuator (11) arranged to press the stack of discs with a view to exerting an electromechanical braking force on the wheel (1), **characterised in that** the electromechanical actuator (11) is equipped with a safety locking device according to at least one of the preceding claims, associated with a rotating shaft of a kinematic chain of the said actuator.

## Patentansprüche

1. Sicherheitsblockiervorrichtung, die dazu bestimmt ist, ein elektromechanisches Gerät auszurüsten, das mit einer Welle (20) versehen ist, die sich um eine Drehachse (X) dreht, wobei die Vorrichtung ein erstes Reibungselement (21, 22) umfasst, das drehfest mit der Welle (20) verbunden ist und sich in einer zur Drehachse (X) der Welle senkrechten Ebene erstreckt, sowie ein zweites Reibungselement (23, 24), das nichtdrehend ist und sich gegenüber dem ersten Reibungselement (21, 22) erstreckt, wobei eines der beiden Reibungselemente (21,22; 23, 24) unter der Wirkung von steuerbaren Betätigungsmitteln (26, 29) in Translationsrichtung entlang der genannten Achse (X) zwischen einer Blockierstellung, in der die beiden Reibungselemente (21, 22; 23 24) von einem elastischen Element (32) aneinander gedrückt werden, und einer Freigabestellung beweglich ist, in der die beiden Reibungselemente (21, 22; 23, 24) zueinander beabstandet gehalten werden, derart, dass die Blockier- und die Freigabestellung den aufeinanderfolgenden Winkelstellungen eines Schalters (25) entsprechen, der in Drehrichtung bewegbar und in Translationsrichtung mit dem in Translationsrichtung bewegbaren Reibungselement (23, 24) verbunden ist, wobei der Schalter (25) von dem vorgenannten elastischen Element (32) in einer seiner Winkelstellungen gehalten wird, ohne dass die Betätigungsmittel (26, 29) in das Halten der Blockierstellung oder der Freigabestellung eingreifen, wobei die steuerbaren Betätigungsmittel (26, 29) derart angeordnet sind, dass sie den Übergang des Schalters (25) von einer Winkelstellung in die nächste ermöglichen und infolge dessen den Übergang des in Translationsrichtung beweglichen Reibungselements (23, 24) von einer in die andere seiner Stellungen zur Blockierung und Freigabe, **dadurch gekennzeichnet, dass** der Schalter (25) auf die Drehachse (X) zentriert ist.

2. Sicherheitsvorrichtung nach Anspruch 1, **dadurch gekennzeichnet, dass** der Schalter (25) ein Indexierungselement (52) umfasst, das in Vertiefungen (50, 51) eines Kranzes (27) aufgenommen ist, wobei die Vertiefungen in Umfangsrichtung an dem Kranz (27) angeordnet und in eine erste und eine zweite Reihe von sich abwechselnden Vertiefungen eingeteilt sind, wobei die Vertiefungen (50) der ersten Reihe eine solche Tiefe haben, dass die Reibungselemente (21, 22; 23, 24) in Kontakt stehen, ehe das Indexierungselement (52) am Boden der Vertiefungen (50) anstößt, und die Vertiefungen (51) der zweiten Reihe eine solche Tiefe haben, dass das Indexierungselement (52) am Boden der Vertiefungen (51) anstößt, ehe die Reibungselemente (21, 22; 23, 24) in Kontakt stehen.

3. Sicherheitsvorrichtung nach Anspruch 2, **dadurch gekennzeichnet, dass** die steuerbaren Betätigungsmittel einen Stößel (26) umfassen, der axial beweglich und derart angeordnet ist, dass er den Schalter (25) entgegen dem elastischen Element (32) drückt, derart, dass er das Indexierungselement (52) aus der Vertiefung (50 oder 51) des Kranzes (27), mit der es in Eingriff steht, ausrückt, wobei der Schalter (25) und/oder der Stößel (26) ein Nockenprofil haben, das eine Drehung des Schalters (25) hervorruft, derart, dass während der Rückkehr des Stößels (26) in seine Ausgangsstellung die Verschiebung des Indexierungselements (52) in Richtung einer angrenzenden Vertiefung hervorgerufen wird.

4. Sicherheitsvorrichtung nach Anspruch 3, **dadurch gekennzeichnet, dass** das Nockenprofil von dem Stößel (26) getragen wird und auf das freie Ende (53) des Indexierungselements (52) einwirkt.

5. Sicherheitsvorrichtung nach einem der Ansprüche 2 bis 4, **dadurch gekennzeichnet, dass** das Indexierungselement (52) eine Vielzahl von Zähnen (52) umfasst, die sich in Richtung des Kranzes (27) erstrecken, wobei die Zähne (52) zahlenmäßig um die Hälfte unter der Anzahl von Vertiefungen (50, 51) des Kranzes (27) liegen.

6. Sicherheitsvorrichtung nach einem der Ansprüche 3 bis 5, **dadurch gekennzeichnet, dass** ein zusätzliches Rückstellelement (30) mit dem Stößel (26) zusammenwirkt, um denselben nach seiner Betätigung in seine Ausgangsstellung zurückzubringen.

7. Sicherheitsvorrichtung nach einem der Ansprüche 3 bis 6, **dadurch gekennzeichnet, dass** die steuerbaren Betätigungsmittel einen Elektromagneten (29) umfassen, der dazu dient, den Stößel (26) zu betätigen, wobei der Elektromagnet (29) nur versorgt wird, um das in Translationsrichtung bewegliche Reibungselement (23, 24) von einer Blockierstellung in eine Freigabestellung zu bewegen und umgekehrt.

8. Bremse (F) für ein Rad (1) eines Flugzeugs, umfassend einen Stapel Scheiben, die Rotoren (4) umfassen, die drehfest mit dem Rad (1) verbunden sind, sowie Statoren (6), die nichtdrehend und in dem Stapel abwechselnd mit den Rotoren (4) angeordnet sind, wobei die Bremse mindestens einen elektromechanischen Aktuator (11) umfasst, der so angeordnet ist, dass er den Stapel Scheiben zusammendrückt, um eine Bremskraft auf das Rad (1) auszuüben, **dadurch gekennzeichnet, dass** der elektromechanische Aktuator (11) mit einer Sicherheitsblockiervorrichtung nach mindestens einem der vorhergehenden Ansprüche versehen ist, die mit einer sich drehenden Welle der kinematischen Kette des Aktuators verbunden ist.
